Europäisches Patentamt

**European Patent Office**

**Office européen des brevets**

(19)

(11) Publication number: **0 114 479**

**A2**

(12) **EUROPEAN PATENT APPLICATION**

(21) Application number: **83307614.4**

(22) Date of filing: **14.12.83**

(51) Int. Cl.³: **H 01 R 13/52**
**H 01 R 43/00**

(30) Priority: **27.12.82 US 453327**

(43) Date of publication of application:
**01.08.84 Bulletin 84/31**

(84) Designated Contracting States:
**BE DE FR GB IT NL SE**

(71) Applicant: **AMP INCORPORATED**
**P.O. Box 3608 449 Eisenhower Boulevard**
**Harrisburg Pennsylvania 17105(US)**

(72) Inventor: **Redmond, John Peter**
**5213 Deerfield Avenue**
**Mechanicsburg Pennsylvania 17055(US)**

(72) Inventor: **Synder, Clair Wilson**
**No 11, Box 511**
**York Pennsylvania 17406(US)**

(72) Inventor: **Thakrar, Anil C.**
**533 Springhouse Road**
**Camp Hill Pennsylvania 17011(US)**

(74) Representative: **Gray, Robin Oliver et al,**
**BARON & WARREN 18 South End Kensington**
**London W8 5BU(GB)**

(54) **Environmentally sealed connector and method and means for the manufacture thereof.**

(57) A connector housing comprises a rigid part (14) and a flexible part (12) joined at an interface (15) by a chemical bond, suitably a cross-linked polymer bond. The elastomeric property of the flexible part (12) provides an environmental seal about a member passing through a passageway (20) and the rigid part (14) a firm mounting. In a method of manufacture a 2-part mould has an ejector sleeve and spaced sprues for injecting flexible setting and rigid setting material respectively. The sleeve is movable to block one of the sprues to allow for sequential injection of the flexible and rigid parts.

Fig.1

EP 0 114 479 A2

"ENVIRONMENTALLY SEALED CONNECTOR AND METHOD AND MEANS
FOR THE MANUFACTURE THEREOF"

This invention relates to an environmentally sealed electrical connector, and particularly to a connector housing comprising rigid and flexible parts, and also to a method of and means for manufacture of such a connector.

This invention relates, generally, to an environmentally sealed connector and more particularly to an electrical connector having a connector housing which is comprised of rigid and flexible parts.

In the electrical connector art the use of rigid and flexible materials in the same connector is known generally in the form of washers, 0-rings or physical mating through glues, force fits or threading of flexible to rigid material. The purpose in such a combination is generally to provide environmental sealing or strain relief or to allow for replacement or insertion of contacts. Such connectors may be found in United States Patent No. 4 090 759 "Micro-Miniature Circular High Voltage Connector" issued 23 May 1978 to Hermann, Jr., and United States Patent No. 3 838 382 "Retention System for Electrical Contacts" issued 24 September 1974 to Sugar.

Since the use of rigid and flexible components for contact housings is substantial, it would be advantageous to have a contact housing in which the rigid and flexible materials are formed in one piece. Relatively hard and relatively soft resilient materials are used together in United States Patent No. 1 929 743 "Caster and the Like" issued 10 October 1933 to Jarvis et al. This scheme utilised the dissimilarity in hardness of materials for a wheel caster and uses essentially the same material which exhibits different hardnesses at different portions thereof.

It is an object to produce a unitary connector housing in which one part is of rigid material and the other is of flexible material whereby environmental sealing can readily be obtained at the flexible portion while the rigid portion provides a secure base.

A method of making a connector housing comprising portions of rigid and flexible material according to the invention is characterised by the steps of

a) closing a two part mould to define a housing mould cavity having at least two sprues offset with respect to each other

b) moving an ejector sleeve within the mould cavity to close all but one of the sprues and to define a reduced mould cavity

c) injecting a first fluid flexible-setting material through the open sprue into the mould cavity and setting the material to form a flexible resilient housing portion blocking of the open sprue

d) moving the ejector sleeve to open a further sprue and enlarge the mould cavity

e) injecting second fluid rigid-setting material through the open sprue into the mould cavity and against the housing portion and setting the material in the cavity to form a rigid housing portion chemically bonded to the flexible housing portion at an interface junction

f) opening the mould and ejecting the connector housing by movement of the ejector sleeve.

Suitably core pins in the mould form a passageway through the flexible and rigid portions and the interface junction.

A connector housing comprising flexible and rigid parts according to the invention is characterised by the parts being chemically bonded at an interface junction and at least one passageway extending through the parts and the interface junction.

A mould for manufacturing a connector housing according to the invention comprises a pair of separable mould parts defining a housing mould cavity and at least two sprues, an ejector sleeve being slidably mounted in one of the mould parts, is characterised in that the sprues are offset in the cavity in the direction of traverse of the ejector sleeve and the sleeve is traversable from a position closing all but one of the sprues and defining a reduced cavity, to a position opening at least one further sprue and defining an enlarged cavity.

The invention will now be described, by way of example, with reference to the accompanying drawings, in which:

Figure 1 is a partly exploded view of a connector according to the present invention;

Figure 2 is a cross-sectional view taken through the connector of Figure 1 in assembled condition; and

Figure3 is a cross-sectional view of a mould showing the manufacture of a connector housing.

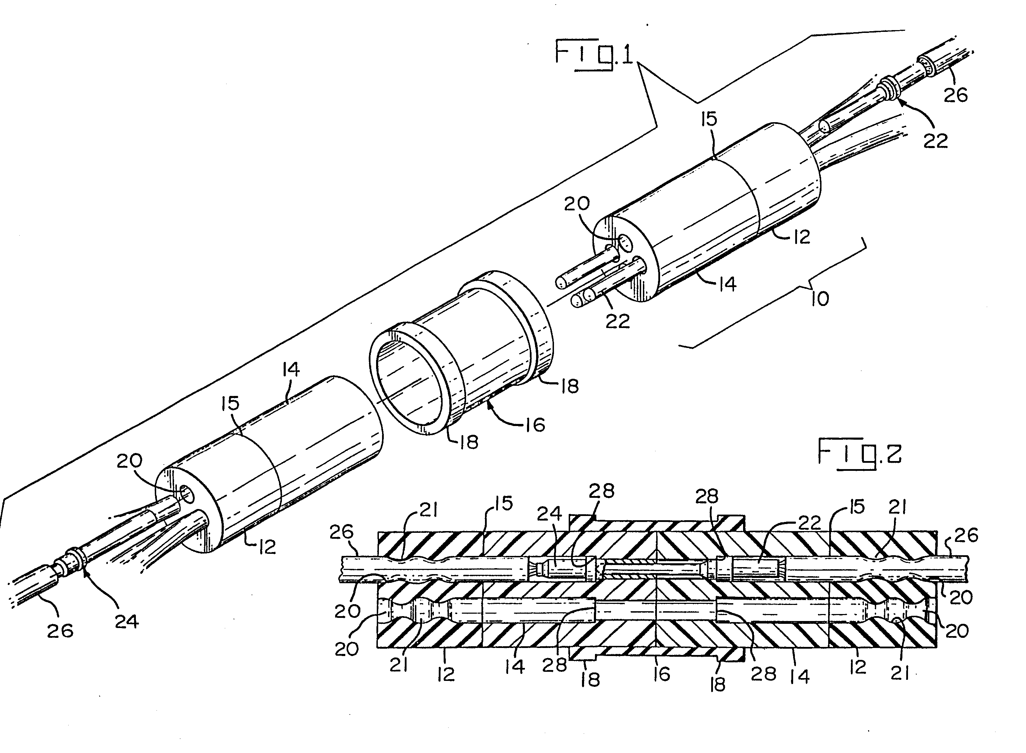

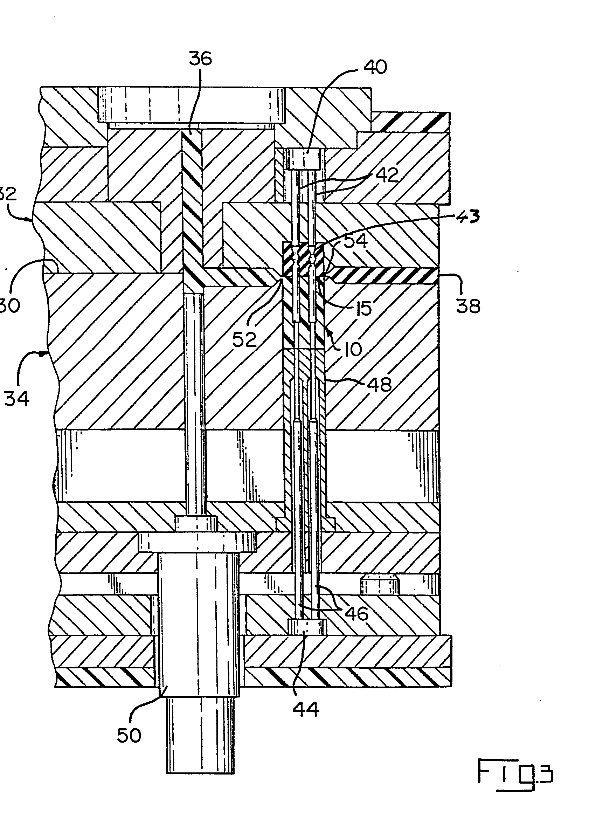

In Figure 1 two connector housings 10 each have two portions, a housing flexible portion 12 and a housing rigid portion 14. Disposed between the two connector housings 10 is the housing mating seal 16 which provides environmental protection upon mating of the two connector housing halves (shown more clearly in Figure 2). The housing mating seal 16 has a ridge 18 disposed at each end which assists securely to hold the seal 16 onto the housings 10. Disposed in the connector housings 10 are contact passageways 20 extending through the portions 12,14 and which allow for insertion and/or removal of individual contacts. It is to be understood that the positioning and number of contact passageways 20 may vary without departing from the spirit and scope of the present invention. Also shown is a male pin or plug 22 and a female socket 24 each having a wire 26 attached thereto. Further shown is the interface junction 15 disposed within each of the connector housings 10 between the flexible and the rigid portions 12,14.

In Figure 2 it can be seen how the housing mating seal 16 is fitted over the exterior of the housing rigid portions 14 with resilient flexure sealingly to engage the housing rigid portions. Also shown are the wires 26 which pass through the contact passageways 20 and are securely firmly held in place by annular ridges 21. The ridges 21 are formed internally of the passageways 20 in the housing flexible portion 12 and define an environmentally tight seal around the exterior of the wires 26 as well as providing strain relief and securing the contacts against inadvertent withdrawal. Disposed within the passageways 20 in the rigid housing portion 14 are rear facing annular ledges 28 which provide for forward stops for a male pin 22 and a female socket 24.

In this manner of construction the housings 10 are of a hermaphroditic nature wherein the pin or the socket may be used in either of the housings 10.

Referring now to Figure 3 the operation and general characteristics of the mould are generally known in the art and therefore only a brief description will be found below. The mould has a parting line 30 between upper "A" end plate 32 and lower "B" plate 34. Also shown are sprues 52 and 54 for injection of fluid rigid setting material 36 and fluid flexible setting material 38 respectively. The sprue 54 opens to the connector mould cavity at a position slightly above the position of sprue 52.

Disposed on the upper mould plate 32 is a top pin assembly 40 which has two top core contact passageway pins 42. The number of the pins 42 is dictated by the number of contact passageways 20 and may therefore vary accordingly. A lower core pin assembly 44 has lower core contact passageway pins 46 and thereby in conjunction with the top core contact pins 42 form contact passageways 20 through the housing 10. Further, the top core contact pins 42 have ridges and recesses 43 to form the ridges 21 in the flexible connector housing 10. An ejector sleeve 48 is utilised to eject a finished connector housing 10 from the mould as well as control the flow of the rigid and flexible setting materials 36,38 as described below. A hydraulic cylinder 50 is used to separate the "A" plate 32 from the "B" plate 34 as described below.

The manufacturing of the component is accomplished by a closing of the "A" and "B" mould plates 32,34. The ejector sleeve 48 then moves upward to a point just slightly above the lower sprue 52 thereby prohibiting the introduction of fluid rigid setting material 36 therethrough while leaving the upper sprue 54 open. The fluid flexible setting material 38 is then injected into the mould through sprue 54 and forms the housing flexible portion 12. After setting of the portion 12, the ejector sleeve 48 is retracted to the position shown in Figure 3 thereby defining the total overall length of the housing 10. Fluid rigid setting material 36 is then injected through the sprue 52 to form the housing rigid portion 14. The housing flexible portion 12 remains in the upper portion of the mould in the position shown, and prevents further fluid flexible setting material 38 from entering into the mould before the introduction of the rigid setting material 36. Due to the temperature of the rigid material 36 in relation to the flexible material 38 as well as the material utilised (shown by way of example in Table 1 below) a chemical bond occurs at the interface point 15. After setting the mould is opened at the parting line 30 with the top core pins 42 moving outward until the housing portion 12 is out of the cavity in the upper mould plate. The mould would then continue to open whereby the top core pins 42 are withdrawn from the housing 10 which remains in the "B" plate 34. The ejector sleeve 48 is then moved upwards and ejects the housing 10. In a preferred embodiment the rigid material 36 is a glass filled ethylene-propylene terpolymer (EPDM) while the flexible material 38 is an unfilled ethylene-propylene terpolymer (EPDM) and a cross-linked polymer bond is formed between the two materials at the interface junction 15. Since both materials are EPDM, interface adhesion is by chemical bond which is very strong, and exhibits a smooth continuous surface junction within the housing 10 between the flexible and rigid portions 12, 14. Chemical bonds evident from tests have shown that cohesive failures occurs in the flexible material region rather than at the interface junction 15. Different materials may be used to achieve differing properties between the two portions of the housing 10. Three types of materials which are preferred are thermoplastics, thermoplastic rubber, and thermosetting rubber.

Shown below, in exemplary fashion, while not intended to limit the number of materials which may be utilised with the present invention are commercially available materials and are readily usable by one skilled in the art:

TABLE 1

| RIGID | SOFT |
|---|---|
| 1. DR-48 (General Electric Corp) glass reinforced polybutylene terephthalate | Hytrel 4056 (DuPont Corp) polyester elastomer |
| 2. PDX 5278 (LNP INC.) 20% Gr. TPR 1900 thermoplastic elastomer | TPR 1700 (Uniroyal Corp) styrene-butadiene thermoplastic rubber |
| 3. Telcar 101 BLK (Goodrich) thermoplastic elastomer | Exxon TDX 17 thermoplastic elastomer |
| 4. CIBA-Geigy D-58 thermoplastic elastomer | TPR-1700 (Uniroyal) |

TABLE 1

| RIGID | SOFT |
|---|---|
| 5. Telcar 101 (Goodrich) | TPR-1700 (Uniroyal) |
| 6. 20% Glass Reinforced EPDM | Unfilled EPDM Terpolymer of ethylene propylene and butadiene |

It is to be understood that many variations of the present invention may be utilised without departing from the spirit and scope of the present invention. For example, differing shapes of connecting housings such as rectangular and/or oblong may be utilised as well as different sizes. Additionally, the contact apertures may vary in size and/or shape from housing to housing and with respect to each other. Also, a contact and housing arrangement may be utilised in conjunction with bulk head connectors, circuit boards, and may therefore only require one connector and housing as opposed to the pair shown in the drawings. Further, other types of contact arrangements may be utilised which may include the use of cables other than electrical cables such as, for example, fibre optics, adaptor arrangements wherein female contacts are disposed at both ends of a connector or a combination thereof. Additionally, the mating seal may be omitted and/or changed in size or shape or the housings themselves may be configured so as to utilise additional features so as to engage housings with each other differently than that shown. Further, a series of soft and rigid materials may be utilised such as for example, wherein the rigid material is disposed between two portions of flexible material.

The invention produces an environmentally sealable connector which is suitable for a multitude of uses and which is relatively inexpensive as well as easy to manufacture. The elastomeric character of the flexible part facilitates environmental sealing of a member passing through a connector passageway and the rigid part provides a firm base for locating the member.

0114479

CLAIMS

1. A method of making a connector housing comprising portions of rigid and flexible material which is characterised by the steps of:-

a) closing a two part mould (32,34) to define a housing mould cavity having at least two sprues (52, 54) offset with respect to each other

b) moving an ejector sleeve (48) within the mould cavity to close all but one (54) of the sprues (52, 54) and to define a reduced mould cavity

c) injecting a first fluid flexible-setting material (38) through the open sprue (54) into the mould cavity and setting the material (38) to form a flexible resilient housing portion (12) blocking of the open sprue (54)

d) moving the ejector sleeve (48) to open a further sprue (52) and enlarge the mould cavity

e) injecting second fluid rigid-setting material (36) through the open sprue (52) into the mould cavity and against the housing portion (12) and setting the material (36) in the cavity to form a rigid housing portion (14) chemically bonded to the flexible housing portion (12) at an interface junction (15)

f) opening the mould (32,34) and ejecting the connector housing (10) by movement of the ejector sleeve (48).

2. A method as claimed in claim 1, characterised by core-pin means in the mould forming a passageway through the flexible and rigid connector portions (12, 14) and interface junction (15).

3.    A connector housing comprising a flexible and a rigid part characterised by the parts (12, 14) being chemically bonded at an interface junction (15) and at least one passageway extending through the parts (12, 14) and the interface junction (15).

4.    A connector housing as claimed in claim 3, characterised by annular ridges (21) formed internally of the passageway (20) in the flexible part (12).

5.    A connector housing as claimed in claim 3 or 4, characterised by an electrical contact (22, 24) terminating a conductor (26) mounted in the passageway (20) with the contact (22, 24) located in the rigid part (14) and the conductor (26) extending through the flexible part (12) of the housing which resiliently and sealingly engages the conductor (26).

6.    A connector comprising a pair of connector housings as claimed in claim 5, characterised in that one housing (10) contact comprises a socket (24) and the other housing contact comprises a pin (22), the pin (22) being arranged to mate with the socket (24) on engagement of the housing (10).

7.    A connector as claimed in claim 6, characterised in that the socket (24) is contained within its housing (10) whereas the pin (22) projects forwardly of its housing whereby the pin (22) and socket (24) can be brought into mating engagement with the housings (10) in abutting relation.

8.    A connector housing as claimed in claim 3 or claim 4 characterised by a cable (21) extending from the passageway (20) at the flexible part (12), and resiliently sealingly engaged by the flexible part (12).

9.    A connector housing as claimed in claim 8 characterised in that the cable (21) is a fibre optic cable.

10.   A method as claimed in claim 1 or a connector housing as claimed in claim 3, characterised in that the rigid part (14) is formed of a glass filled ethylene-propylene terpolymer and the flexible part (12) is formed of an unfilled ethylene-propylene terpolymer, the parts (12, 14) being joined at the interface junction (15) by a cross-linked polymer bond between them.

11.   A mould for carrying out the method of claim 1, comprising a pair of separable mould parts (32,34) defining a housing mould cavity and at least two sprues (52,54), an ejector sleeve (48) being slidably mounted in one of the mould parts (34), characterised in that the sprues (52,54) are offset in the cavity in the direction of traverse of the ejector sleeve (48) and the sleeve (48) is traversable from a position closing all but one of the sprues (54) and defining a reduced cavity, to a position opening at least one further sprue (52) and defining an enlarged cavity.

0114479

Fig.1

Fig.2

Fig.3